# EUROPEAN PATENT SPECIFICATION

(11) **EP 3 797 596 B1**
(45) Date of publication and mention of the grant of the patent: **01.03.2023**
(21) Application number: 19911560.1
(22) Date of filing: 09.08.2019
(51) Int. Cl.: A23B 7/02, A23L 3/40, A23L 7/10

(54) **DRIED POWDER OF EDIBLE PLANT, FOOD AND BEVERAGE, AND PRODUCTION METHOD THEREFOR**
TROCKENES PULVER AUS EINER ESSBAREN PFLANZE, NAHRUNGSMITTEL UND GETRÄNKE SOWIE VERFAHREN ZUR HERSTELLUNG DAVON
POUDRE SÈCHE DE PLANTE COMESTIBLE, ET ALIMENT / BOISSON AINSI QUE PROCÉDÉ DE FABRICATION ASSOCIÉ

(30) Priority: 23.01.2019 JP 2019009766
(43) Date of publication of application: 31.03.2021
(73) Proprietor: Mizkan Holdings Co., Ltd., Handa-shi, Aichi 475-8585 (JP)
(72) Inventor: HIGUCHI, Tatsuya, Handa-shi, Aichi 475-8585 (JP); IHARA, Junichiro, Handa-shi, Aichi 475-8585 (JP)
(74) Representative: Mewburn Ellis LLP
(86) International application number: PCT/JP2019/031589
(87) International publication number: WO 2020/152895

(56) References cited:
- WO-A1-2015/146121
- WO-A1-2015/182424
- WO-A1-2018/056415
- JP-A- 2010 259 333
- JP-A- 2017 061 431
- JP-A- 2018 099 033
- JP-A- 2018 154 576
- WÓJCIK ARTUR ET AL: "The use of the photogrammetric method for measurement of the repose angle of granular materials", MEASUREMENT, vol. 115, 5 October 2017 (2017-10-05), pages 19-26, XP085264379, ISSN: 0263-2241, DOI: 10.1016/J.MEASUREMENT.2017.10.005

## Description

### Technical Field

The present invention relates to a dried powder of an edible plant, use of the same and a method for producing the same.

### Background Art

Since a dried powder of a food contains a small amount of moisture and has a large surface area, it can problematically absorb moisture in an atmosphere and get damped easily. When the dried powder gets damped, it the usability becomes poor due to generation of lump up, or that the microorganisms propagate and the flavor and color tone deteriorate.

As a technique relating to prevention of damping of dried powder, Patent Literature 1 discloses a technique relating to a film for packaging a powdered food which has a sufficient barrier property when it is made into a bag, and which protects the powdered food from moisture and air (oxygen) to prevent deterioration of the quality of the powdered food.

However, there has been a problem that a special packaging bag needed to be used. In addition, a method of enclosing a desiccant containing a moisture absorbent such as silica gel, but there is still a similar problem and a possibility of contamination.

Therefore, there has been a need for a technique to prevent from quality deterioration caused by damping, by using a dietary material only. For example, Patent Literature 2 discloses a technique relating to a baked food which is baked by covering at least an outer surface with an edible film material. Patent Literature 3 discloses a technique relating to a moisture absorption inhibitory agent or a caking inhibitory agent containing an adhesive composition containing powdery fat/oil. Patent Literature 4 discloses a technique for preventing caking caused by moisture absorption of a powdered food/drink by containing a polyglyceryl fatty acid ester having an HLB value of 5 or less into a powdered food/drink or a raw material thereof.

JP 2010-259333 A concerns a Bacillus subtilis-containing product, which is a viscous product with a viscosity of 2,000-600,000 cps at 20°C.

### Prior Art Literatures

### Patent Literatures

[Patent Literature 1] JP Hei 10-16122-A
[Patent Literature 2] JP Hei 2-255045-A
[Patent Literature 3] JP 2018-148885-A
[Patent Literature 4] JPWO 2015/182424-A

### Summary of the Invention

### Problem

However, by way of the method recited in Patent Literature 2, the dried powder had a remarkably large surface area, and it was difficult to cover the entire surface with an edible film material or the like. Though the method recited in Patent Literature 3 can be applicable to a powder, there was a problem that the flavor of the adhesive composition containing powder fat/oil per se can affect the flavor of the dried food. Patent Literature 4 teaches that the method recited therein minimizes the organoleptic quality of the powdered food, and it is considered that the flavor of the dried powder is not affected, but it requires additives other than the main food material of the powder food. That is, there is an issue as described above in preventing damping of the dried powder. Damping of the dried powder can cause issues such as deteriorated handling caused by caking of the powder and worsened fluidity, resulting in deterioration in flavor and color tone.

It is an object of the present invention to provide a powder of an edible plant which hardly gets damped in a simple manner, without a substance other than a dried edible plant serving as a main food material for imparting features to a flavor and a color tone of a dried powder, and a method for producing the same.

### Solution

As a result of energetic studies in view of the above circumstances, the present inventors focused on the effect of a non-edible part of edible plants, which is not taught in the conventional art. The present inventors newly found that the above problems can be easily solved simultaneously by adjusting the shape characteristics of the powder defined by the repose angle and the "loose bulk density/tight bulk density" to certain ranges. Specifically, it was conventionally believed that the smaller value of the repose angle was advantageous in the industry, due to less crosslinking or the like. However, the present inventors intentionally adjusted the repose angle to a specific value or above. In addition, the higher value of the "loose bulk density/tight bulk density" was believed to be industrially advantageous in terms of powder fluidity. The present inventors adjusted the "loose bulk density/tight bulk density" to a level lower than a specific value or below, thereby finding that the powder fluidity was lost, but the powder was more resistant to damping. Then, the present inventors completed the following inventions by further energetic researches on the basis of the above findings.

That is, the present invention relates to a dried powder as defined in claim 1, use of the dried powder as defined in claim 12 and a method for producing a dried powder as defined in claim 13.

### Advantageous Effect of the Invention

The present invention provides a dried powder of edible plant which hardly gets damped without relying on a substance other than the dried edible plant serving as a main food material for imparting features to a flavor and a color tone of a dried powder, and a method for producing the same.

### Description of Embodiments

Hereinafter, examples of the present invention embodiments will be described, but the present invention is not limited to these aspects, and can be implemented with any modifications without departing from the gist thereof.

The present invention relates to a dried powder comprising an edible part and a non-edible part of a dried edible plant, satisfying the following conditions (1) to (5):
(1) a proportion of the non-edible part to the edible part of the dried edible plant is 1% by mass or more and 200% by mass or less;
(2) a repose angle is 0.7 rad or more;
(3) "loose bulk density/tight bulk density" is 0.88 or less;
(4) a moisture content is 20% by mass or less; and
(5) a content of dietary fiber is 18% by mass or more.

The edible plant in the present invention is cereal, potato, pulse, vegetable or fruit as defined below. These foodstuffs may be used alone or two or more in any combination. These foodstuffs may be used as they are, or may be used after being subjected to various treatments (for example, drying, heating, removal of harshness, peeling, removal of seeds, after ripening, salting, and processing of fruit peels). The classification of the foodstuff can be determined from the state of the whole plant combined with the non-edible part.

Cereals are corn (in particular, sweetcorn is preferred), rice and sugar cane. Above all, corn (in particular, sweetcorn is preferred) is preferred.

Potatoes are sweet potato.

Pulses are pea (in particular, green pea which is an unripe seed obtained by harvesting the seed with pods in an unripe state and whose bean exhibits a green appearance), broad bean and soybean (green soybean which is an unripe seed obtained by harvesting the soybean with pods in an unripe state and whose bean exhibits a green appearance). Some of the foodstuffs in which the edible part (for example, green soybean and green pea) are handled as a vegetable can be determined from the state of the whole plant (for example, soybean and pea) combined with the non-edible part (for example, pod) whether the foodstuff belongs to beans.

Vegetables are carrot, table beet (beetroot): a breed improved to use the root of beet for food, kale, onion, cabbage, spinach, tomato, pumpkin, broccoli and paprika. Above all, carrot, pumpkin, paprika, table beet (beetroot), broccoli, spinach and kale are preferred.

Fruits are apple, grape, orange, lemon, yuzu, sudachi, grapefruit, bitter orange, and flat lemon.

In the present invention, the "non-edible part" of the edible plant refers to the part of the edible plant which is usually not suitable for drinking and eating or the part which is to be discarded in usual dietary habits, and the "edible part" refers to the part excluding the disposal site (non-edible part) from the whole edible plant. Particularly for the edible plant containing a thick dietary fiber layer, a trichome, or the like, these parts are not available for eating and often discarded due to bad feeding performance and bad compatibility with other food products. In the present invention, the non-edible part containing such a thick dietary fiber layer, a trichome, or the like can be suitably used.

In the edible plant used for the present invention, the edible part and the non-edible part thereof may be derived from different kinds of edible plants, but it is preferred to contain the edible part and the non-edible part derived from the same kind of edible plant from the viewpoint the uniformity of flavor. Further, it is preferred to contain the edible part and the non-edible part derived from the same edible plant individual. That is, such an edible plant can be effectively utilized by using a part or the whole of the edible part and a part or the whole of the non-edible part each derived from the same edible plant individual.

Examples of the non-edible part of the edible plant include skin, seed, core, and draff of the various edible plants described above. Above all, since rich nutrients remain in the skin, one or more of seed, core and draff of corn (for example, sweetcorn), paprika, pumpkin, table beet, broccoli, spinach, carrot, kale, green soybean, pea, broad bean, sweet potato, tomato, rice, onion, cabbage, apple, grape, sugar cane, citrus fruits (for example, satsuma mandarin and yuzu) is used in the present invention. The non-edible part of the edible plant is one or more selected from bract or pistil or cob of corn (for example, sweetcorn); stem end or core or seed of paprika; pith or seed or both ends of pumpkin; root tip or skin or petiole of table beet; leaf and stem of broccoli; plant foot of spinach; root tip or petiole base of carrot; petiole base of kale; pod of green soybean; pod of pea; seed skin or pod of broad bean; surface skin and both ends of sweet potato; stem end of tomato; rice hull of rice (unhulled rice); skin (protective leaf), bottom part, or head part of onion; core of cabbage; core of apple; fruit peel and seed of grape; draff of sugar cane; and peel, seed, and pith of citrus fruits (for example, satsuma mandarin and yuzu). One not containing any components harmful to the human body in a degree that affects the human body is preferably used.

The site or the ratio of the non-edible part in the edible plant used in the present invention could be of course understood by those skilled in the art of handling the food product or the processed product of the food product. For example, the "disposal site" and the "disposal ratio" described in the Standard Tables of Food Composition in Japan 2015 (Seventh Revised Edition) can be referenced and respectively treated as the site and the ratio of the non-edible part. The following Table 1 lists examples of the edible plant and the "disposal site" and the "disposal ratio" (that is, the site and the ratio of the non-edible part) described in the Standard Tables of Food Composition in Japan 2015 (Seventh Revised Edition) with respect to the edible plant.

**[Table 1]**

| Edible plant | Site of non-edible part (disposal site) | Ratio of non-edible part (disposal ratio) |
|---|---|---|
| Vegetables/green soybean/raw | Pod | 45% |
| Vegetables/(corns)/sweetcorn/immature seed, raw | Bract, pistil, and cob | 50% |
| Vegetables/(pumpkins and squashes)/Japanese pumpkin/fruit, raw | Pith, seed, and both ends | 9% |
| Vegetables/(sweet peppers)/red sweet pepper/fruit, raw (paprika) | Stem end, core, and seed | 10% |
| Vegetables/table beet/root, raw | Root tip, skin, and petiole | 10% |
| Vegetables/broccoli/inflorescence, raw | Leaf and stem | 50% |
| Vegetables/(tomatoes)/tomato/fruit, raw | Stem end | 3% |
| Vegetables/(cabbages)/cabbage/head-forming leaf, raw | Core | 15% |
| Vegetables/spinach/leaf, raw | Plant foot | 10% |
| Vegetables/kale/leaf, raw | Petiole base | 3% |
| Vegetables/(peas)/green pea/raw | Pod | 55% |
| Vegetables/broad bean/immature bean/raw | Seed coat, pod | 80% |
| Vegetables/(carrots)/root, with skin, raw | Root tip and petiole base | 3% |
| Potatoes and starches/sweet potato/tuberous root, raw | Surface skin and both ends | 10% |

The dried edible plant in the present invention may be prepared by subjecting various edible plants described above to drying. Any method commonly used in the drying of the food product can be used as a drying method. Examples thereof include sun drying, shade drying, freeze drying, air drying (for example, hot air drying, fluid bed drying, spray drying, drum drying, and low-temperature drying), pressure drying, reduced-pressure drying, microwave drying, and oil heat drying. Above all, an air drying method (for example, hot air drying, fluid bed drying, spray drying, drum drying, and low-temperature drying) or a freeze drying method is preferred in view of small degree in the change of the inherent color tone and the flavor of the foodstuff and controllability of the fragrance (such as a burning smell) other than the food product.

The 'dried' state in the present invention refers to a state where the moisture content is about 20% by mass or less, the water activity value is 0.85 or less. In addition, the moisture content is preferably 15% by mass or less, and more preferably 10% by mass or less. Further, the water activity value is preferably 0.80 or less, and more preferably 0.75 or less. Measurements are carried out in accordance with a method for subjecting the dried powder to a reduced-pressure heat-drying method as a method for quantifying water content and a known method using an ordinary water activity measuring apparatus as a method for measuring water activity value.

The dried powder in the present invention contains the edible part and the non-edible part of the dried edible plant and the lower limit value of the proportion of the non-edible part to the edible part of the dried edible plant is only required to be 1% by mass or more from the viewpoint of achieving the effect of the present invention, and it is above all preferably 3% by mass or more, even more preferably 10% by mass or more, and most preferably 20% by mass or more. On the other hand, the upper limit value is preferably 200% by mass or less, above all preferably 150% by mass or less, and even more preferably 100% by mass or less from the viewpoint of a non-preferred flavor such as acrid taste derived from the non-edible part.

As described above, mixing of the non-edible part of the dried edible plant with the edible part in predetermined amounts allows the dried powder of the present invention to have a particular particle structure and shape defined by the repose angle of the particles and the "loose bulk density/tight bulk density" due to fiber characteristics of the non-edible part so that powder having favorable drying properties which is less likely to be damped is obtained. As described above, the flowability of the dried powder is lost by mixing the non-edible part of the dried edible plant with the edible part in predetermined amounts, but as a result, an effect of increasing re-drying properties of the powder is achieved and a powder having favorable drying properties which is less likely to be damped is obtained.

It is known as common knowledge that a silicon compound contained in the soil improves the flowability of the dried powder, when a site having many opportunities to come in contact with the soil (the non-edible part such as the skin or pod of a food product or the edible part exposed to the outside) is used. Thus, it is desired not to contain the silicon from the soil if possible so that the effect of the present invention can be achieved by not improving the flowability and the dried powder may have a quality suitable for human ingestion from the viewpoint of safety and security. Specifically, the silicon content in the dried powder is preferably 1,000 ppm or less, even more preferably 800 ppm or less, even more preferably 600 ppm or less, even more preferably 400 ppm or less, even more preferably 200 ppm or less, and most preferably 100 ppm or less. Specifically, the number of viable cells after drying is preferably adjusted to be 10⁶ cells/g or less because the composition may have a quality suitable for human ingestion, and is most preferably adjusted to be 10⁵ cells/g or less.

The repose angle refers to a maximum angle of a slope where the powder remains stable without being spontaneously collapsed when the powder is stacked, and it is determined depending on the particle size and the roundness or the shape of particles. While a discharge method, a drop weight method, an injection method, and a tilting method are known as the method for measuring the repose angle, the repose angle is measured by an injection method in which injection is made into a fixed circular plate with a holding edge for holding the dried powder.

More specifically, the dried powder is stacked by an injection method to form a symmetry, approximately conical laminate on a fixed circular plate having a radius r (cm) with a holding edge for holding the dried powder, and then a height H (cm) which is the difference between the highest portion of the holding edge and the highest portion of the approximately conical laminate is measured, and this allows the "repose angle α(°)" to be determined from "tanα = H/r" and allows the repose angle to be calculated as "repose angle (rad)" = "α × π/180". Specifically, a value measured at a condition of r = 1.75 cm can be adopted. In the dried powder of the present invention, the flowability of the particles is lost by adjusting the repose angle to 0.7 rad or more, but as a result, an effect of enhancing re-drying properties is achieved. Above all, the repose angle is preferably 0.8 rad or more, even more preferably 0.9 rad or more, and most preferably 1.0 rad or more. The upper limit of the repose angle is preferably 1.3 rad or less, and even more preferably 1.2 rad or less from the viewpoint of flowability of the dried powder. The repose angle is enhanced by containing the non-edible part of a plant.

The "loose bulk density/tight bulk density" of powder is an indication of the compressibility of powder and determined depending on the particle size and the shape. The loose bulk density is an apparent density when powder is gently filled into a container without compaction and represents a ratio of the mass of a powder sample in an untapped (loose) state to the volume of the powder containing a factor of the interparticle void volume. Therefore, the bulk density depends on the particle density of powder and the spatial arrangement (for example, the shape) of particles in a powder layer.

The tight bulk density is also referred to as a press density and is an apparent density obtained by pressing powder into a container until the volume of the powder no longer changes (in the present invention, under a pressure of 0.6 MPa) and then compressing the powder. It is measured by, for example, pressing a plunger until the volume of the powder no longer changes (for example, at a force of 5 kgf) using a plastic syringe (LS disposal syringe 2 mL: maximum memory: 3 mL, level full volume: 4.0 mL, inside diameter: 1 cm) which is closed to the extent not causing dropping of the powder while securing the permeability of the cylindrical tip. In the dried powder of the present invention, the flowability of the particles is lost by adjusting the "loose bulk density/tight bulk density" to 0.88 or less, but as a result, free water is likely to be released from the particles and an effect of enhancing re-drying properties is achieved. Above all, the "loose bulk density/tight bulk density" is preferably 0.85 or less, even more preferably 0.80 or less, and even more preferably 0.75 or less. The lower limit of the "loose bulk density/tight bulk density" is preferably 0.15 or more, and more preferably 0.25 or more. The "loose bulk density/tight bulk density" is reduced by containing the non-edible part of a plant.

Further, in the dried powder of the present invention, the "tapped bulk density/tight bulk density of powder" is preferably 0.85 or less, even more preferably 0.80 or less, and most preferably 0.75 or less because the dried powder may have a quality which makes drying easy. The lower limit of the "loose bulk density/tight bulk density" is preferably 0.15 or more, and more preferably 0.25 or more. The tapped bulk density refers to an apparent density at the time of tap filling and it is measured by injecting powder up to the level full volume while tapping.

The dried powder of the present invention contains 18% by mass or more of the dietary fiber. Above all, the content of the dietary fiber is preferably 20% by mass or more, even more preferably 22% by mass or more, and particularly preferably 25% by mass or more from the viewpoint of achieving the effect of the present invention. The upper limit of the content of the dietary fiber is preferably 60% by mass or less, more preferably 50% by mass or less, and even more preferably 40% by mass or less. As used herein, the dietary fiber refers to the total amount of water-soluble dietary fiber and insoluble dietary fiber, but the dietary fiber to be contained is preferably the insoluble dietary fiber. The content of the insoluble dietary fiber is preferably 70% by mass or more based on the total amount of the water-soluble dietary fiber and the insoluble dietary fiber.

A method typically used to measure components of a food product can be used to measure the total amount of the dietary fiber and the insoluble dietary fiber, and for example, a measuring method in accordance with the method described in the Standard Tables of Food Composition in Japan can be used. Specifically, a method for subjecting the dried powder to the modified Prosky method is used as a method for quantifying the dietary fiber in a food product and insoluble dietary fiber.

In the dried powder of the present invention, the upper limit of d90 after ultrasonication (90% cumulative particle size of a particle size) is preferably 2,000 µm or less. However, the upper limit is above all preferably 1,800 µm. or less, above all preferably 1,600 µm or less, above all preferably 1,400 µm or less, above all preferably 1,200 µm. or less, above all preferably 1,000 µm. or less, above all preferably 900 µm. or less, even more preferably 800 µm or less, preferably 700 µm or less, and preferably 600 µm or less, from the viewpoint of improving drying properties. The lower limit is not particularly limited, but is preferably 30 µm or more, and more preferably 100 µm or more from the viewpoint of handleability. In the present invention, "ultrasonication" represents, unless otherwise specified, a treatment of applying an ultrasonic wave having a frequency of 40 kHz to a measurement sample with an output of 40 W for 3 minutes.

The particle size d90 of the dried powder is defined as the particle size at which, when the particle size distribution of the dried powder is divided into two from a certain particle size, the ratio of the proportion of the cumulative value of the % particle frequency on the large side to the proportion of the cumulative value of the % particle frequency on the small side is 10:90. The particle size d90 of the dried powder can be measured, for example, using a laser diffraction particle size distribution measuring apparatus described below. As used herein, the "particle size" represents particle sizes all measured on the volumetric basis, unless otherwise specified.

d50 after ultrasonication of the dried powder in the present invention (it is defined as the particle size at which, when the particle size distribution of the dried powder is divided into two from a certain particle size, the ratio of the proportion of the cumulative value of the % particle frequency on the large side to the proportion of the cumulative value of the % particle frequency on the small side is 50:50) is preferably 800 µm or less, more preferably 700 µm or less, and even more preferably 600 µm or less. On the other hand, the lower limit thereof is not particularly limited, but is preferably 10 µm or more, and more preferably 50 µm or more, from the viewpoint of handleability. Regarding the measurement method, the measurement is carried out in the same manner as d90 after ultrasonication.

The measurement conditions of the particle size of the dried powder of the present invention are not limited, but the following conditions can be used. First, as the solvent for the measurement, ethanol is used because it hardly affects the structure of the dried powder of the dried edible plant. The laser diffraction particle size distribution measuring apparatus used for the measurement is not limited, but for example, the Microtrac MT3300 EXII system of MicrotracBEL Corp. can be used. The measurement application software is not limited, but for example, the DMS2 (Data Management System version 2, MicrotracBEL Corp.) can be used. When the aforementioned measuring apparatus and software are used, it is only required for the measurement to press the cleaning button of the software to conduct cleaning, followed by pressing the Set zero button of the software to conduct zero adjustments, and directly charging the sample until the concentration becomes within an appropriate range by sample loading. When the sample after agitation, that is, the sample having been subjected to ultrasonication is measured, the sample having been subjected to ultrasonication in advance may be charged, or ultrasonication may be performed using the aforementioned measuring apparatus after charging the sample, and subsequently, the measurement may be performed. In this case, after the sample not being subjected to ultrasonication is charged into the apparatus and the concentration is adjusted within the appropriate range by sample loading, the ultrasonication button of the software is pressed to perform ultrasonication. Thereafter, a degassing treatment is performed three times and the sample loading process is performed again. After it is confirmed that the concentration is still within the appropriate range, a laser diffraction measurement at a flow velocity of 60% and at a measurement time of 10 seconds is performed and the result can be determined as a measurement value. The parameter for the measurement is, for example, distribution display: volume, refractive index of particle: 1.60, refractive index of solvent: 1.36, measuring upper limit (µm) = 2,000.00 µm, and measuring lower limit (µm) = 0.021 µm.

When the particle size of the dried powder in the present invention is determined, it is preferred that the particle size distribution for each channel (CH) be measured at first and then the particle size for each channel described in Table 2 below be used as the standard. Specifically, the % particle frequency for each channel (also referred to as "the % particle frequency of channel **") can be determined by measuring the frequency of particles whose particle size is not more than the particle size defined for each channel in Table 2 below and larger than the particle size defined for the channel having one higher number (in the largest channel within the measuring range, a particle size at the measuring lower limit) for each channel in Table 2 below, and using the total frequency of all channels within the measuring range as a denominator. For example, the % particle frequency of channel 1 represents the % frequency of particles having a particle size of 2,000.00 µm or less and larger than 1,826.00 µm.

**[Table 2]**

| Channel | Particle diameter (*µ*m) | Channel | Particle diameter (*µ*m) | Channel | Particle diameter (*µ*m) | Channel | Particle diameter (*µ*m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

In the dried powder of the present invention, in order to adjust the dried edible plant such that d90 after ultrasonication (90% cumulative particle size of a particle size) may be 2,000 µm or less, any of a method of drying the edible part and/or the non-edible part of the edible plant and then subjecting it to a finely pulverizing treatment, or a method of drying the edible part and/or the non-edible part being subjected to a finely pulverizing treatment, or a combination thereof may be used. The same applies to d50 after ultrasonication.

The means for finely pulverizing treatment used in the present invention is not particularly limited. The temperature at the time of finely pulverizing is not limited and any of high-temperature grinding, normal-temperature grinding, and low-temperature grinding may be used. The pressure at the time of finely pulverizing is also not limited and any of high-pressure grinding, normal-pressure grinding, and low-pressure grinding may be used. However, it is preferred to use a means which allows to treat the foodstuff and other components, which are materials of the composition, with high shear forces under pressure and elevated temperature conditions in a short time from the viewpoint of effectively obtaining a dried edible plant powder. Examples of the apparatus for such a finely pulverizing treatment include instruments such as a blender, a mixer, a mill, a kneader, a grinder, a pulverizer, and an attritor, but any of which may be used. For the apparatus thereof, for example, a medium agitation mill such as a dry bead mill and a ball mill (such as tumbling and vibrating), a jet mill, a highspeed rotation impact mill (such as a pin mill), a roll mill and a hammer mill can be used.

The dried powder of the present invention is preferably packaged in a sealed container when distributed as a product, but since having a moisture absorption-suppressing effect (being less likely to be damped) as described above, it is preferred not to enclose any drying agent which may cause contamination. The material or the shape of the sealed container is not limited at all.

In the present invention, the lower limit of the content of the non-edible part of the edible plant based on the whole dried powder is only required to be 1% by mass or more. Above all, it is preferably 2.5% by mass or more, even more preferably 3% by mass or more, even more preferably 5% by mass or more, even more preferably 7% by mass or more, and most preferably 9% by mass or more from the viewpoint of improving re-drying properties. On the other hand, the upper limit is only required to be 90% by mass or less, but above all, it is preferably 800 by mass or less, even more preferably 70% by mass or less, and most preferably 60% by mass or less from the viewpoint of taste. This seems to be derived from the effect of the non-edible part of the edible plant which contains a large amount of insoluble dietary fiber, but the detailed reason thereof is unclear.

Furthermore, when the total content of the edible part and the non-edible part of the dried edible plant based on the whole dried powder is in a predetermined range in the present invention, characteristics (an effect of making the dried powder less likely to be damped) are dominantly exerted over the whole dried powder. For example, the total content of the edible part and the non-edible part of the dried edible plant based on the whole powder is only required to be 10% by mass or more, and above all, it is preferably 30% by mass or more, even more preferably 50% by mass or more, above all preferably 70% by mass or more, in particular preferably 90% by mass or more, and above all preferably 100% by mass from the viewpoint of efficacy of the effect. The kind of other dried powder other than when the content of the dried edible plant based on the whole powder is 100% by mass is not limited at all, as long as the powder does not prevent the effect of the present invention. If it is a food material in a dried powder state, foodstuffs can be appropriately selected in accordance with the desired flavor and quality for the final dried powder, without being limited by the kind of foodstuffs, the combination of kinds thereof, and the application.

The present invention also relates to a method for producing dried powder by subjecting the dried edible plant having a proportion of the non-edible part to the edible part of 1% by mass or more and 200% by mass or less and a moisture content of 20% by mass or less to grinding until the repose angle reaches 0.7 rad or more and the "loose bulk density/tight bulk density" reaches 0.88 or less. Details are as described above.

The present invention also relates to a method for making the dried powder less likely to be damped by subjecting the dried edible plant having a proportion of the non-edible part to the edible part of 1% by mass or more and 200% by mass or less and a moisture content of 20% by mass or less to a finely pulverizing treatment until the repose angle reaches 0.7 rad or more and the "loose bulk density/tight bulk density" reaches 0.88 or less. Details are as described above.

The present invention also relates to a food/beverage containing the dried edible plant powder of the present invention. The amount of the dried edible plant powder of the present invention blended into the food/beverage to be added is not particularly limited and only required to be appropriately adjusted so that the flavor of the edible plant as the raw material of the dried edible plant powder can be imparted to the food/beverage. The proportion of the edible plant powder based on the total amount of the food/beverage is preferably 10% by mass or more, more preferably 20% by mass or more, more preferably 30% by mass or more, and particularly preferably 40% by mass or more, based on the proportion of dry weight. The upper limit is preferably 100% by mass or less.

The food/beverage of the present invention is not limited at all and the form thereof may be any of a liquid form, a semi-solid form, or a solid form. Examples of the kind of the food/beverage include a liquid food product such as beverage (for example, soup and smoothie), food/beverage in a liquid, semi-solid or solid form such as seasonings (for example, mayonnaise, dressing, butter, and margarine), a semi-solid or solid food such as confectioneries (for example, granola, stick, cracker, caramel, gummy, and chips), and a powder food product such as dry seasonings, and above all, a powder food product is preferred from the viewpoint of more significantly achieving the effect of the present invention.

### Examples

Hereinafter, the present invention will be described in further detail with reference to Examples.

### [Preparation of dried edible plant sample]

Dried edible plants of Comparative Examples 1 to 10 and Test Examples 1 to 16 were prepared as follows.

Sweetcorn, beetroot, carrot, pumpkin, paprika, and sweet potato were respectively separated into the edible part and the non-edible part and finely cut. In addition, pea (edible part: green pea, non-edible part: pod) and soybean (edible part: green soybean, non-edible part: pod) were boiled and beans which were removed from the pod and dried were separated into the edible part, and other parts (pod) were separated into the non-edible part, and each of them was finely cut. Then, each of them was dried using a forced-air dryer (Electric Dehydrator DSK-10 manufactured by Shizuoka Seiki Co., Ltd.) at an ambient temperature of 70°C. All the dried materials were subjected to a drying treatment until the moisture content reached 20% by mass. These were subjected to a fine grinding using a mill (Wonder Crusher WC-3, purchased from OSAKA CHEMICAL Co., Ltd.). Thereafter, each of the edible part and the non-edible part of the edible plant was mixed in the proportions shown in Table 3 and Table 4 and homogenized.

The dietary fiber, repose angle, "loose bulk density/tight bulk density", and d90 and d50 after ultrasonication of these dried edible plants were measured. Specific methods of measurement were as described above. The dietary fiber was measured by a Modified Prosky Method; the repose angle was measured by an injection method in which injection is made into a fixed circular plate (r = 1.75 cm) with a holding edge; regarding the "loose bulk density/tight bulk density", the loose bulk density is measured by directly injecting powder in a plastic syringe (LS disposal syringe 2 mL: maximum memory: 3 mL, level full volume: 4.0 mL, inside diameter: 1 cm) up to the level full volume in which the plastic syringe is closed to the extent not causing dropping of the powder while securing the permeability of the cylindrical tip, and a tapped bulk density was measured by injecting the powder into a syringe up to the level full volume while tapping until the volume of the powder in the syringe no longer changes, and the tight bulk density was measured by pressing a plunger at a force of 5 kgf until the volume of the powder in the syringe no longer changed and then thereby compressing the powder under a pressure of 0.6 MPa. d90 after ultrasonication was measured by using the Microtrac MT3300 EXII system of MicrotracBEL Corp. as a laser diffraction particle size distribution measuring apparatus, the DMS2 (Data Management System version 2, MicrotracBEL Corp.) as a measurement application software, and ethanol as a solvent.

Then, after 50% by mass of water was added to each of the powder adjusted as described above, each mixture was allowed to stand in an atmosphere of 70°C and dried. The ease of drying of the powder (re-drying properties) was evaluated by measuring the time required for drying until the moisture content reached 10% by mass. For the evaluation criteria, the evaluation was carried out based on the five grades: 5: easily re-dried and preferred, 4: slightly easily re-dried and slightly preferred, 3: neither preferred nor unpreferred, 2: slightly less easily re-dried and slightly unpreferred, 1: less easily re-dried and unpreferred. For example, when 5 g of water is added to 10 g of powder (the moisture content of 10% by mass), static drying of the mixture was then performed in an atmosphere of 70°C. As a result, when it takes 60 minutes until the weight after drying reaches 10 g, the time required for drying until the moisture content reaches 10% by mass is 60 minutes. When static drying is performed, any typical forced-air drying apparatus can be used.

Furthermore, the evaluation was carried out for the resistance to dampness of each powder. A typical thermohygrostat (KCL-2000A, manufactured by TOKYO RIKAKIKAI CO, LTD.) was used, the relative humidity of the air in the apparatus was adjusted to about 75 Rh%, and about 1 g of powder was allowed to stand in a container in an atmosphere of 20°C for about 30 days, and thereafter, the flavor, appearance, and physical properties were observed as a quality of the powder. For the evaluation criteria, the evaluation was carried out based on the five grades: 5: change in quality is small before and after storage and preferred, 4: change in quality is slightly small before and after storage and slightly preferred, 3: quality changes as compared with the quality before storage but within the acceptable range, 2: change in quality is slightly outstanding before and after storage and slightly unpreferred, 1: change in quality is outstanding before and after storage and unpreferred.

Training of the following A) to C) were conducted for sensory test panelists, and panelists who have particularly excellent results in the training, product development experience, and a wide variety of knowledge about the quality such as the taste and texture of food products, and can perform an absolute evaluation on each sensory evaluation item, were selected.
A) Quality of taste discrimination test in which, for five basic tastes (sweet: taste of sugar, sour: taste of tartaric acid, umami: taste of sodium glutamate, salty: taste of sodium chloride, bitter: taste of caffeine), one aqueous solution having a concentration close to the threshold of each component is prepared for respective components and two distilled water are added to make a total of seven samples, and from which the sample of each taste is accurately discriminated.
B) Concentration discrimination test in which concentration differences in five kinds of saline solutions and acetic acid aqueous solutions each having slightly different concentrations are accurately discriminated.
C) Three-item discrimination test in which, two soy sauces from manufacturer A and one soy sauce from manufacturer B are provided and among a total of three samples, the soy sauce from B is accurately discriminated.

For every evaluation item as mentioned above, the evaluation of the standard sample was performed by all panelists in advance and the evaluation criteria for each score were standardized, and then the objective sensory test was performed by ten panelists. The evaluation of each evaluation item was evaluated by a method, in which each panelist selected any one number closest to the evaluation by the panelist from the 5-point scale for each item. The evaluation results were summarized by calculating the arithmetic mean value from the scores of ten panelists.

The results are shown in Table 3 and Table 4.

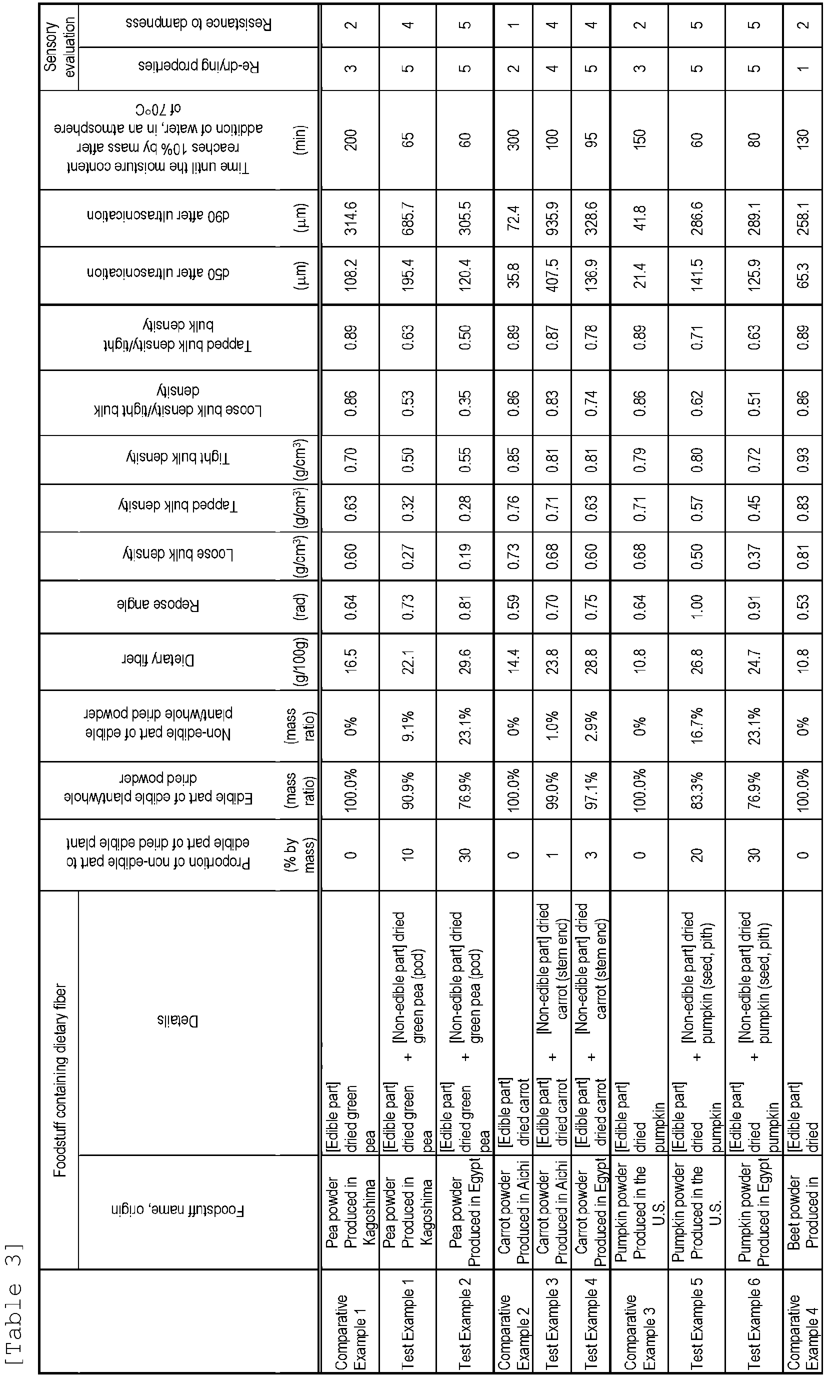

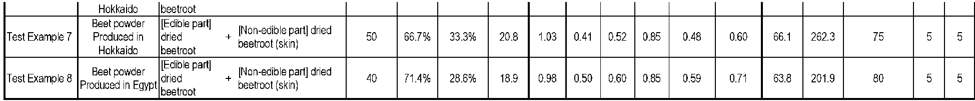

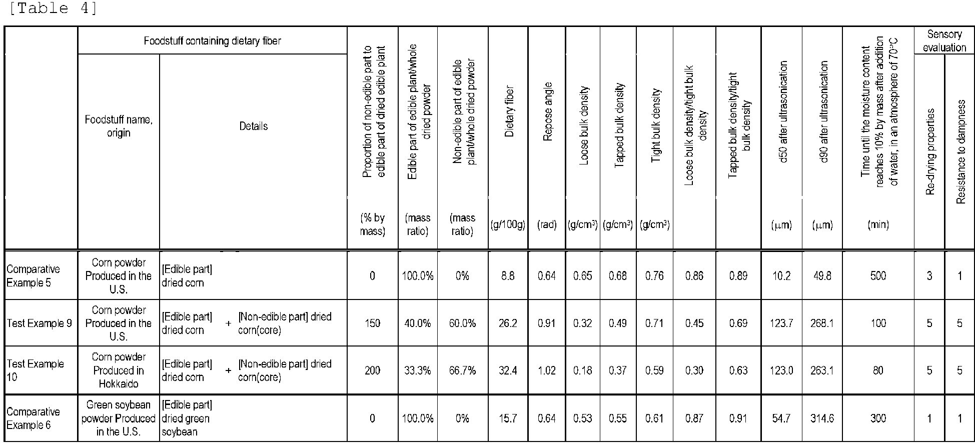

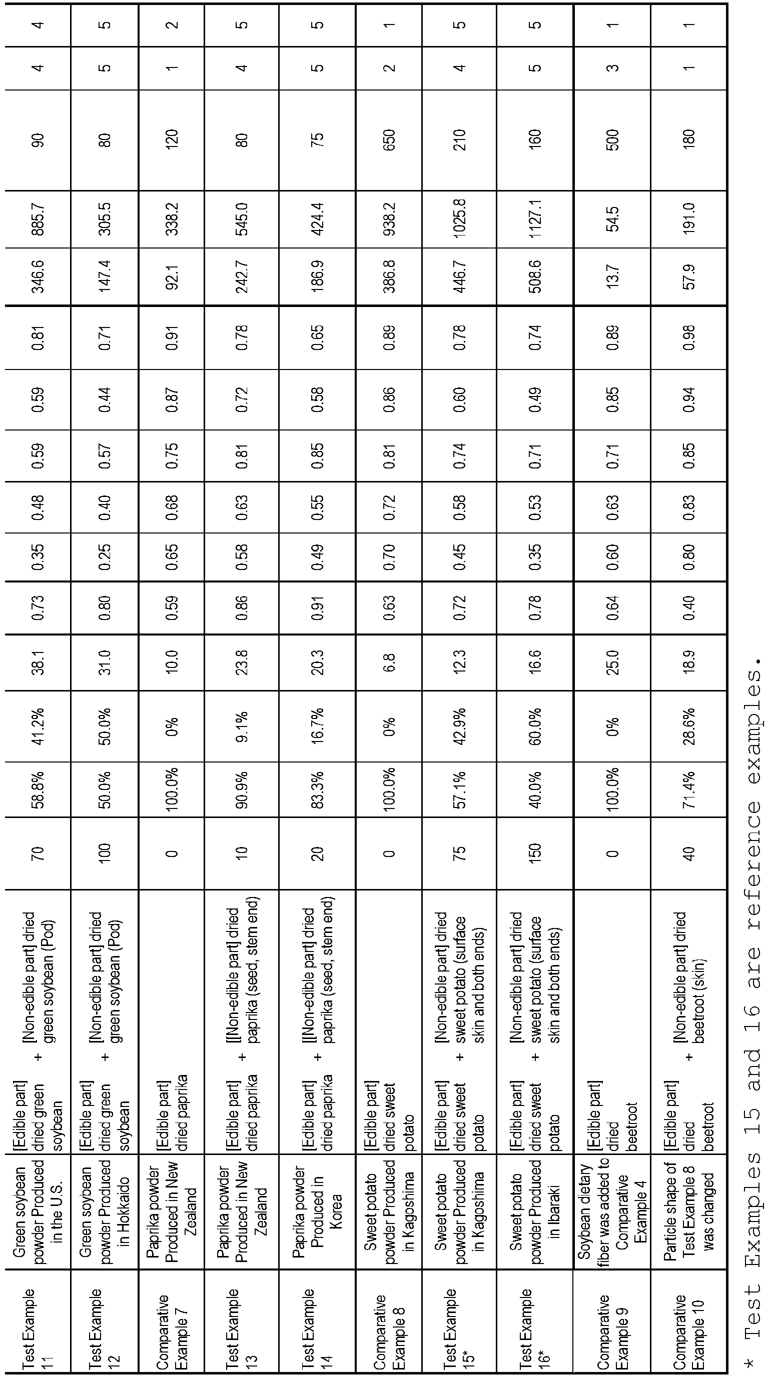

As a result, it was found that, even when any of the edible plants were used, the time until the moisture content reaches 10% by mass after addition of water in an atmosphere of 70°C is shorter, re-drying properties are more favorable, and the foodstuff containing dietary fiber is less likely to be damped, in the case of mixing the non-edible part with the edible part as compared with the case of only the edible part.

Then, the influence of dried edible plant powder of the present invention on the resistance to dampness of the whole dried powder was examined by using the soybean powder (containing the edible part and the non-edible part) prepared in Test Example 12. Sugar powder having d90 of 500 µm. was used as an example of the dried powder other than the dried edible plant powder, and as shown in Table 5, the content of the dried edible plant based on the whole dried powder is changed, and the sensory evaluation was carried out for the resistance to dampness of the whole dried powder in the same manner as in the above test.

The results are shown in Table 5.

**[Table 5]**

| | Dried powder | | | | Content of dried edible plant based on the whole powder | Time until the moisture content reaches 10% by mass after addition of water, in an atmosphere of 70°C | Sensory evaluation | |
|---|---|---|---|---|---|---|---|---|
| | | | | | | | Re-drying properties | Resistance to dampness |
| | Dried edible plant (prepared in Test Example 12) | | | Other foodstuff (dried powder) | (% by mass) | (min) | | |
| Comparative Example 11 | [Edible part] dried green soybean | + | [Non-edible part] dried green soybean (Pod) | Sugar (d90 = 500 µm) | 0 | 400 | 1 | 1 |
| Test Example 17 | | | | | 10 | 260 | 4 | 4 |
| Test Example 18 | | | | | 20 | 210 | 5 | 4 |
| Test Example 19 | | | | | 30 | 170 | 5 | 4 |
| Test Example 20 | | | | | 40 | 150 | 5 | 4 |
| Test Example 21 | | | | | 50 | 120 | 5 | 5 |
| Test Example 22 | | | | | 60 | 100 | 5 | 5 |
| Test Example 23 | | | | | 70 | 90 | 5 | 5 |
| Test Example 24 | | | | | 80 | 85 | 5 | 5 |
| Test Example 25 | | | | | 90 | 83 | 5 | 5 |
| Test Example 26 | | | | | 100 | 80 | 5 | 5 |

As a result, it was found that, when the dried edible plant containing an edible part and a non-edible part is mixed based on the whole dried powder, the whole dried powder is less likely to be damped. Therefore, it was found that the content of the dried edible plant based on the whole dried powder dominantly exerts its characteristics (an effect of making the dried powder less damped) over the whole dried powder.

### Industrial Applicability

The dried edible plant containing an edible part and a non-edible part of the present invention is expected to be applied mainly in the food product field thanks to the effect of imparting resistance to dampness accompanying an improvement of re-drying properties with respect to the dried powder.

## Claims

1. A dried powder comprising an edible part and a non-edible part of a dried edible plant, satisfying the following conditions (1) to (5):
(1) a proportion of the non-edible part to the edible part of the dried edible plant is 1% by mass or more and 200% by mass or less;
(2) a repose angle, which is measured by a method as described in the description, is 0.7 rad or more;
(3) "loose bulk density/tight bulk density" is 0.88 or less;
(4) a moisture content is 20% by mass or less; and
(5) a content of dietary fiber is 18% by mass or more,
wherein
the edible plant is one or more selected from corn, paprika, pumpkin, table beet, broccoli, spinach, carrot, kale, green soybean, pea, broad bean, sweet potato, tomato, rice, onion, cabbage, apple, grape, sugar cane and citrus fruits,
the non-edible part of the edible plant is one or more selected from bract or pistil or cob of corn; stem end or core or seed of paprika; pith or seed or both ends of pumpkin; root tip or skin or petiole of table beet; leaf and stem of broccoli; plant foot of spinach; root tip or petiole base of carrot; petiole base of kale; pod of green soybean; pod of pea; seed skin or pod of broad bean; surface skin and both ends of sweet potato; stem end of tomato; rice hull of rice; skin, bottom part, or head part of onion; core of cabbage; core of apple; fruit peel and seed of grape; draff of sugar cane; and peel, seed, and pith of citrus fruits, and
the edible part is the part excluding the non-edible part from the whole edible plant.

2. The dried powder according to claim 1, further satisfying (6):
(6) d90 after ultrasonication is 2,000 µm or less,
wherein d90 is determined by a method as described in the description.

3. The dried powder according to claim 1 or 2, further satisfying (7):
(7) "tapped bulk density/tight bulk density" is 0.85 or less.

4. The dried powder according to any one of claims 1 to 3, comprising the non-edible part of the edible plant in an amount of 1% by mass or more and 90% by mass or less based on the whole dried powder.

5. The dried powder according to any one of claims 1 to 4, wherein the edible part and the non-edible part of the edible plant are derived from the same kind of edible plant.

6. The dried powder according to any one of claims 1 to 5, wherein the edible part and the non-edible part of the edible plant are derived from the same individual edible plant.

7. The dried powder according to any one of claims 1 to 6, wherein the edible plant is one or more selected from the group consisting of paprika, table beet, green soybean, corn, carrot, pumpkin, pea, broad bean, sweet potato, broccoli, spinach, and kale.

8. The dried powder according to any one of claims 1 to 7, wherein the dried powder is packaged in a sealed container with no drying agent therein.

9. The dried powder according to any one of claims 1 to 8, wherein a content of the dried edible plant is 10% by mass or more based on the whole dried powder.

10. The dried powder according to any one of claims 1 to 9, wherein a content of silicon is 1,000 ppm or less.

11. The dried powder according to any one of claims 1 to 10, wherein the dried powder is for human ingestion.

12. Use of the dried powder according to claim 11 for human ingestion.

13. A method for producing a dried powder, comprising subjecting a dried edible plant having a proportion of a non-edible part to an edible part of 1% by mass or more and 200% by mass or less, and a moisture content of 20% by mass or less to grinding until the repose angle reaches 0.7 rad or more and "loose bulk density/tight bulk density" reaches 0.88 or less, wherein a content of dietary fiber of the dried powder is 18% by mass or more,
wherein
the edible plant is one or more selected from corn, paprika, pumpkin, table beet, broccoli, spinach, carrot, kale, green soybean, pea, broad bean, sweet potato, tomato, rice, onion, cabbage, apple, grape, sugar cane and citrus fruits,
the non-edible part of the edible plant is one or more selected from bract or pistil or cob of corn; stem end or core or seed of paprika; pith or seed or both ends of pumpkin; root tip or skin or petiole of table beet; leaf and stem of broccoli; plant foot of spinach; root tip or petiole base of carrot; petiole base of kale; pod of green soybean; pod of pea; seed skin or pod of broad bean; surface skin and both ends of sweet potato; stem end of tomato; rice hull of rice; skin, bottom part, or head part of onion; core of cabbage; core of apple; fruit peel and seed of grape; draff of sugar cane; and peel, seed, and pith of citrus fruits, and
the edible part is the part excluding the non-edible part from the whole edible plant.

## Patentansprüche

1. Getrocknetes Pulver, umfassend einen verzehrbaren Teil und einen nichtverzehrbaren Teil einer getrockneten verzehrbaren Pflanze, das folgende Bedingungen (1) bis (5) erfüllt:
(1) ein Anteil des nichtverzehrbaren Teils zum verzehrbaren Teil der getrockneten verzehrbaren Pflanze beträgt 1 Massen-% oder mehr und 200 Massen-% oder weniger;
(2) ein Schüttwinkel, der durch ein Verfahren wie in der Beschreibung beschrieben gemessen wird, beträgt 0,7 rad oder mehr;
(3) die "lose Schüttdichte/dichte Schüttdichte" beträgt 0,88 oder weniger;
(4) ein Feuchtigkeitsgehalt beträgt 20 Massen-% oder weniger; und
(5) ein Gehalt von Ballaststoffen beträgt 18 Massen-% oder mehr, wobei
die verzehrbare Pflanze eine oder mehrere ist, die aus Mais, Paprika, Kürbis, Roter Rübe, Brokkoli, Spinat, Karotte, Kohl, grüner Sojabohne, Erbse, Favabohne, Süßkartoffel, Tomate, Reis, Zwiebel, Kraut, Apfel, Traube, Zuckerrohr und Zitrusfrüchten ausgewählt ist/sind,
der nichtverzehrbare Teil der verzehrbaren Pflanze einer oder mehrere ist, der/die aus Hüllenblatt oder Blütenstempel oder Kolben von Mais; Stammende oder Kern oder Samen von Paprika; Mark oder Kernen oder beiden Enden von Kürbis; Wurzelspitze oder Blattstiel von Roter Rübe; Blättern und Stamm von Brokkoli; Pflanzenstamm von Spinat; Wurzelspitze oder Blattstielbasis von Karotte; Blattstielbasis von Kohl; Schote von grüner Sojabohne; Schote von Erbse; Samenhaut oder Schote von Favabohne; Oberflächenhaut und beiden Enden von Süßkartoffel; Stammende von Tomate; Reisschale von Reis; Haut, unterem Teil oder Kopfteil von Zwiebel; Kern von Kraut; Kern von Apfel; Fruchtschale und Kernen von Trauben; Treber von Zuckerrohr; und Zesten, Kernen und Mark von Zitrusfrüchten ausgewählt ist/sind, und
der verzehrbare Teil der Teil ausschließlich des nichtverzehrbaren Teils der gesamten verzehrbaren Pflanze ist.

2. Getrocknetes Pulver nach Anspruch 1, das weiters (6) erfüllt:
(6) d90 nach Ultraschallbehandlung beträgt 2.000 µm oder weniger, wobei d90 durch ein Verfahren wie in der Beschreibung beschrieben bestimmt wird.

3. Getrocknetes Pulver nach Anspruch 1 oder 2, das weiters (7) erfüllt:
(7) "geklopfte Schüttdichte/dichte Schüttdichte" beträgt 0,85 oder weniger.

4. Getrocknetes Pulver nach einem der Ansprüche 1 bis 3, umfassend den nichtverzehrbaren Teil der verzehrbaren Pflanze in einer Menge von 1 Massen-% oder mehr und 90 Massen-% oder weniger bezogen auf das gesamte getrocknete Pulver.

5. Getrocknetes Pulver nach einem der Ansprüche 1 bis 4, wobei der verzehrbare Teil und der nichtverzehrbare Teil der verzehrbaren Pflanze von derselben Art der verzehrbaren Pflanze abgeleitet sind.

6. Getrocknetes Pulver nach einem der Ansprüche 1 bis 5, wobei der verzehrbare Teil und der nichtverzehrbare Teil der verzehrbaren Pflanze von derselben einzelnen verzehrbaren Pflanze abgeleitet sind.

7. Getrocknetes Pulver nach einem der Ansprüche 1 bis 6, wobei die verzehrbare Pflanze eine oder mehrere ist, die aus der aus Paprika, Roter Rübe, grüner Sojabohne, Mais, Karotte, Kürbis, Erbse, Favabohne, Süßkartoffel, Brokkoli, Spinat und Kohl bestehenden Gruppe ausgewählt ist/sind.

8. Getrocknetes Pulver nach einem der Ansprüche 1 bis 7, wobei das getrocknete Pulver in einem dicht verschlossenen Behälter ohne Trocknungsmittel darin verpackt ist.

9. Getrocknetes Pulver nach einem der Ansprüche 1 bis 8, wobei ein Gehalt der getrockneten verzehrbaren Pflanze 10 Massen-% oder mehr bezogen auf das gesamte getrocknete Pulver beträgt.

10. Getrocknetes Pulver nach einem der Ansprüche 1 bis 9, wobei ein Gehalt von Silicium 1.000 ppm oder weniger beträgt.

11. Getrocknetes Pulver nach einem der Ansprüche 1 bis 10, wobei das getrocknete Pulver zum Verzehr durch den Menschen vorgesehen ist.

12. Verwendung eines getrockneten Pulvers nach Anspruch 11 zum Verzehr durch den Menschen.

13. Verfahren zur Herstellung eines getrockneten Pulvers, umfassend das Unterziehen einer getrockneten verzehrbaren Pflanze, die einen Anteil eines nichtverzehrbaren Teils zu einem verzehrbaren Teil von 1 Massen-% oder mehr und 200 Massen-% oder weniger und einen Feuchtigkeitsgehalt von 20 Massen-% oder weniger aufweist, gegenüber Mahlen, bis der Schüttwinkel 0,7 rad oder mehr erreicht und "lose Schüttdichte/dichte Schüttdichte" 0,88 oder weniger erreicht, wobei ein Gehalt von Ballaststoffen des getrockneten Pulvers 18 Massen-% oder mehr beträgt,
wobei
die verzehrbare Pflanze eine oder mehrere ist, die aus Mais, Paprika, Kürbis, Roter Rübe, Brokkoli, Spinat, Karotte, Kohl, grüner Sojabohne, Erbse, Favabohne, Süßkartoffel, Tomate, Reis, Zwiebel, Kraut, Apfel, Traube, Zuckerrohr und Zitrusfrüchten ausgewählt ist/sind,
der nichtverzehrbare Teil der verzehrbaren Pflanze einer oder mehrere ist, die aus Hüllenblatt oder Blütenstempel oder Kolben von Mais; Stammende oder Kern oder Samen von Paprika; Mark oder Kernen oder beiden Enden von Kürbis; Wurzelspitze oder Blattstiel von Roter Rübe; Blättern und Stamm von Brokkoli; Pflanzenstamm von Spinat; Wurzelspitze oder Blattstielbasis von Karotte; Blattstielbasis von Kohl; Schote von grüner Sojabohne; Schote von Erbse; Samenhaut oder Schote von Favabohne; Oberflächenhaut und beiden Enden von Süßkartoffel; Stammende von Tomate; Reisschale von Reis; Haut, unterem Teil oder Kopfteil von Zwiebel; Kern von Kraut; Kern von Apfel; Fruchtschale und Kernen von Trauben; Treber von Zuckerrohr; und Zesten, Kernen und Mark von Zitrusfrüchten ausgewählt ist/sind, und
der verzehrbare Teil der Teil ausschließlich des nichtverzehrbaren Teils der gesamten verzehrbaren Pflanze ist.

## Revendications

1. Poudre séchée comprenant une partie qui peut être consommée et une partie qui ne peut pas être consommée d'une plante comestible séchée, satisfaisant aux conditions (1) à (5) suivantes :
(1) une proportion de la partie qui ne peut pas être consommée par rapport à la partie qui peut être consommée de la plante comestible séchée est supérieure ou égale à 1 % en masse et inférieure ou égale à 200 % en masse ;
(2) un angle de repos, qui est mesuré par un procédé tel que décrit dans la description, est supérieur ou égal à 0,7 rad ;
(3) un rapport « masse volumique apparente à l'état non tassé/masse volumique apparente à l'état tassé » est inférieur ou égal à 0,88 ;
(4) une teneur en eau est inférieure ou égale à 20 % en masse, et
(5) une teneur en fibres alimentaires est supérieure ou égale à 18 % en masse, dans laquelle
la plante qui peut être consommée est choisie parmi le maïs, le paprika, la citrouille, la betterave de table, le brocoli, les épinards, la carotte, le chou frisé, le soja vert, le pois, la fève, la patate douce, la tomate, le riz, l'oignon, le chou, la pomme, le raisin, la canne à sucre et les agrumes,
la partie qui ne peut pas être consommée de la plante qui peut être consommée est une ou plusieurs parties choisies parmi la bractée ou le pistil ou l'épi de maïs ; le bout de tige ou le noyau ou la graine de paprika ; la pulpe ou la graine ou les deux extrémités de la citrouille ; le bout de racine ou la peau ou le pétiole de betterave de table; la feuille et la tige de brocoli ; le pied de plante d'épinards; le bout de racine ou la base de pétiole de carotte ; la base de pétiole du chou frisé ; la gousse de soja vert ; la gousse de pois ; la peau de graine ou la gousse de fève ; la peau superficielle et les deux extrémités de la patate douce ; le bout de tige de tomate ; la balle de riz ; la peau, la partie inférieure ou la partie supérieure de l'oignon ; le coeur de chou ; le coeur de pomme ; les écorces de fruits et pépins de raisin ; la drèche de canne à sucre ; et l'écorce, les pépins et la pulpe des agrumes, et
la partie qui peut être consommée est la partie excluant la partie qui ne peut pas être consommée de l'ensemble de la plante comestible.

2. Poudre séchée selon la revendication 1, satisfaisant en outre (6) :
(6) la d90 après ultrasonification est de 2 000 µm ou moins, dans laquelle la d90 est déterminée par un procédé tel que décrit dans la description.

3. Poudre séchée selon la revendication 1 ou 2, satisfaisant en outre (7) :
(7) le rapport « masse volumique apparente à l'état non tassé/masse volumique apparente à l'état tassé » est inférieur ou égal 0,85.

4. Poudre séchée selon l'une quelconque des revendications 1 à 3, comprenant la partie qui ne peut pas être consommée de la plante comestible en une quantité supérieure ou égale à 1 % en masse et inférieure ou égale à 90 % en masse sur la base de la poudre séchée totale.

5. Poudre séchée selon l'une quelconque des revendications 1 à 4, dans laquelle la partie qui peut être consommée et la partie qui ne peut pas être consommée de la plante comestible sont dérivées du même type de plante comestible.

6. Poudre séchée selon l'une quelconque des revendications 1 à 5, dans laquelle la partie qui peut être consommée et la partie qui ne peut pas être consommée de la plante comestible sont dérivées de la même plante comestible individuelle.

7. Poudre séchée selon l'une quelconque des revendications 1 à 6, dans laquelle la plante comestible est une ou plusieurs choisies dans le groupe comprenant le paprika, la betterave de table, le soja vert, le maïs, la carotte, la citrouille, le pois, la fève, la patate douce, le brocoli, les épinards et le chou frisé.

8. Poudre séchée selon l'une quelconque des revendications 1 à 7, dans laquelle la poudre séchée est emballée dans un contenant scellé sans agent de séchage.

9. Poudre séchée selon l'une quelconque des revendications 1 à 8, dans laquelle une teneur de la plante comestible séchée est supérieure ou égale à 10 % en masse par rapport à la poudre séchée totale.

10. Poudre séchée selon l'une quelconque des revendications 1 à 9, dans laquelle une teneur en silicium est inférieure ou égale 1 000 ppm.

11. Poudre séchée selon l'une quelconque des revendications 1 à 10, dans laquelle la poudre séchée est destinée à une ingestion humaine.

12. Utilisation de la poudre séchée selon la revendication 11 pour une ingestion humaine.

13. Procédé de production d'une poudre séchée, comprenant la soumission d'une plante comestible séchée présentant une proportion d'une partie qui ne peut pas être consommée à une partie qui peut être consommée supérieure ou égale à 1 % en masse et inférieure ou égale à 200 % en masse, et une teneur en humidité inférieure ou égale à 20 % en masse à un broyage jusqu'à ce que l'angle de repos atteigne 0,7 rad ou plus et que la « masse volumique apparente à l'état non tassé/masse volumique apparente à l'état tassé » atteigne 0,88 ou moins, dans lequel une teneur en fibres alimentaires de la poudre séchée est supérieure ou égale à 18 % en masse,
dans lequel
la plante qui peut être consommée est choisie parmi le maïs, le paprika, la citrouille, la betterave de table, le brocoli, les épinards, la carotte, le chou frisé, le soja vert, le pois, la fève, la patate douce, la tomate, le riz, l'oignon, le chou, la pomme, le raisin, la canne à sucre et les agrumes,
la partie qui ne peut pas être consommée de la plante qui peut être consommée est une ou plusieurs parties choisies parmi la bractée ou le pistil ou l'épi de maïs ; le bout de tige ou le noyau ou la graine de paprika ; la pulpe ou la graine ou les deux extrémités de la citrouille ; le bout de racine ou la peau ou le pétiole de betterave de table; la feuille et la tige de brocoli ; le pied de plante d'épinards; le bout de racine ou la base de pétiole de carotte ; la base de pétiole du chou frisé ; la gousse de soja vert ; la gousse de pois ; la peau de graine ou la gousse de fève ; la peau superficielle et les deux extrémités de la patate douce ; le bout de tige de tomate ; la balle de riz ; la peau, la partie inférieure ou la partie supérieure de l'oignon ; le coeur de chou ; le coeur de pomme ; les écorces de fruits et pépins de raisin ; la drèche de canne à sucre ; et l'écorce, les pépins et la pulpe des agrumes, et
la partie qui peut être consommée est la partie excluant la partie qui ne peut pas être consommée de l'ensemble de la plante comestible.
